# EUROPÄISCHE PATENTANMELDUNG

(11) **EP 4 512 840 A1**
(43) Veröffentlichungstag der Anmeldung: **26.02.2025**
(21) Anmeldenummer: 23193338.3
(22) Anmeldetag: 24.08.2023
(51) Int. Cl.: C08G 18/32, C08G 18/36, C08G 18/69, C08G 18/76, C08G 18/79, C09J 175/04

(54) **ZWEIKOMPONENTIGE POLYURETHANZUSAMMENSETZUNG**

(71) Anmelder: Sika Technology AG, 6340 Baar (CH)
(72) Erfinder: KELCH, Steffen, 8102 Oberengstringen (CH)
(74) Vertreter: Sika Patent Attorneys

(57) **Zusammenfassung**

Die vorliegende Erfindung betrifft eine zweikomponentige Polyurethanzusammensetzung bestehend aus einer Polyolkomponente und einer Polyisocyanatkomponente, wobei die Polyolkomponente mindestens ein Umsetzungsprodukt von epoxidierten Pflanzenölen mit monofunktionellen C₁₋₈-Alkoholen **A1-1** und/oder mindestens ein Umsetzungsprodukt von epoxidierten Fettsäureestern monofunktioneller C₁₋₈-Alkohole mit aliphatischen Alkoholen **A1-2,** vorzugsweise mindestens ein Polybutadienpolyol **A2** und mindestens ein alkoxyliertes verzweigtes Alkylendiamin mit 5 - 10 C-Atomen **A3** umfasst. Die erfindungsgemässe Polyurethanzusammensetzung verfügt über eine hohe Festigkeit und eine Offenzeit von mehr als 10 Minuten.

## Beschreibung

### Technisches Gebiet

Die Erfindung betrifft das Gebiet der zweikomponentigen Polyurethanzusammensetzungen und ihre Verwendung, insbesondere als Klebstoff, Vergussmasse oder als Infusionsharz, insbesondere zur Herstellung von Kompositwerkstoffen.

### Stand der Technik

Zweikomponentige Polyurethanklebstoffe auf Basis von Polyolen und Polyisocyanaten werden bereits seit langem eingesetzt. Zweikomponentige Polyurethanklebstoffe haben den Vorteil, dass sie nach dem Mischen schnell aushärten und deshalb bereits nach kurzer Zeit höhere Kräfte aufnehmen und übertragen können. Für den Einsatz als strukturelle Klebstoffe werden hohe Ansprüche in Bezug auf Festigkeit an solche Klebstoffe gestellt, da derartige Klebstoffe Elemente von Last tragenden Strukturen darstellen. Auch für den Einsatz als Vergussmassen oder Infusionsharze werden hohe Ansprüche in Bezug auf die Festigkeit gestellt.

In der WO 2018228936 werden zweikomponentige Polyurethan-zusammensetzung enthaltend N,N,N',N'-Tetrakis(2-hydroxypropyl)-ethylendiamin offenbart zur Verwendung als Klebstoff, Vergussmasse oder als Infusionsharz. Diese Zusammensetzungen weisen jedoch den Nachteil einer kurzen Offenzeit von weniger als 5 Minuten auf und sind daher als strukturelle Klebstoffe wenig geeignet.

Es besteht insbesondere der Wunsch nach Klebstoffen, Vergussmassen und Infusionsharzen, die hohe Festigkeiten im Sinne struktureller Verklebungen über einen möglichst grossen Temperaturbereich, insbesondere im Bereich von -50°C bis über +130°C aufweisen/gewährleisten, verbunden mit einer wenig ausgeprägten Abhängigkeit der Festigkeit von der Temperatur. Weiter sollen die Zusammensetzungen eine Offenzeit von mehr als 10 Minuten aufweisen, was eine Verwendung als Klebstoff für grössere Strukturen im Industrie- und Baubereich ermöglicht.

### Darstellung der Erfindung

Aufgabe der vorliegenden Erfindung ist es daher, eine zweikomponentige Polyurethanzusammensetzung zur Verfügung zu stellen, welche über eine hohe Festigkeit, eine Offenzeit von mehr als 10 Minuten und eine nur schwach ausgeprägte Abhängigkeit der mechanischen Eigenschaften, insbesondere der Festigkeit, von der Temperatur verfügt, insbesondere im Bereich von -40°C bis +100°C.

Überraschenderweise wird diese Aufgabe mit der erfindungsgemässen zweikomponentigen Polyurethanzusammensetzung gelöst. Die Zusammensetzung verfügt über eine hohe Zugfestigkeit und hohe E-moduli mit einer zur Verarbeitung und Applikation ausreichend langen Offenzeit und nur schwach ausgeprägten Abhängigkeit der mechanischen Eigenschaften, insbesondere der Zugfestigkeit und der E-moduli, von der Temperatur.

Weiter wurde überraschenderweise gefunden, dass die erfindungsgemässen Zusammensetzungen durch die Anwesenheit von dem Polybutadienpolyol **A2** eine erste Glasübergangstemperatur (Tg1) bei tiefen Temperaturen von unter -70°C sowie einen zweite dominante Glasübergangstemperatur (Tg2) bei Temperaturen über +100°C, insbesondere über +140°C, aufweisen. Dies hat den Vorteil von über einen breiten und anwendungstechnisch interessanten Temperaturbereich von der Temperatur unabhängigen mechanischen Eigenschaften. Nach dem Erwärmen über eine Temperatur höher als Tg1 verfügt das Material über viskoelastische Eigenschaften und somit über eine strukturbedingte, intrinsische Zähmodifikation.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft eine zweikomponentige Polyurethanzusammensetzung bestehend aus einer Polyolkomponente **K1** und einer Polyisocyanatkomponente **K2**;
wobei die Polyolkomponente **K1**
   - mindestens ein Umsetzungsprodukt von epoxidierten Pflanzenölen mit einem C₁₈-Fettsäuren-Anteil von mehr als 50 Gew.-%, insbesondere mehr als 60 Gew.-%, bezogen auf die Gesamtmenge an Fettsäuren, mit monofunktionellen C₁₋₈-Alkoholen **A1-1;** und/oder
   - mindestens ein Umsetzungsprodukt von epoxidierten Fettsäureestern monofunktioneller C₁₋₈-Alkohole, insbesondere Methanol, mit aliphatischen Alkoholen mit einer OH-Funktionalität im Bereich von 2 bis 5, insbesondere Glycerin, wobei den epoxidierten Fettsäureestern als Fettsäurekomponente Fettsäuregemische zugrunde liegen, die einen Gehalt an C₁₈-Fettsäuren, insbesondere ungesättigten C₁₈-Fettsäuren, von mindestens 50 Gew.-%, bezogen auf die gesamte Fettsäuremischung, aufweisen **A1-2**; und
   - vorzugsweise mindestens ein Polybutadienpolyol mit einer OH-Funktionalität im Bereich von 2.1 bis 2.9, insbesondere 2.3 bis 2.7, und mit einem mittleren Molekulargewicht im Bereich von 2000 bis 4000 g/mol, insbesondere 2500 bis 3000 g/mol, und einer OH-Zahl von 40 - 100 mg KOH/g **A2**; und
   - mindestens ein alkoxyliertes verzweigtes Alkylendiamin mit 5 - 10 C-Atomen, insbesondere 6 - 9 C-Atomen, mit einer OH-Zahl von 450 -800 mg KOH/g **A3**; umfasst,
und wobei die Polyisocyanatkomponente **K2**
   mindestens ein aromatisches Polyisocyanat **B1** umfasst.

Das Verhältnis aller NCO-Gruppen der aromatischen Polyisocyanate **B1** : aller OH-Gruppen der Polyolkomponente **K1** beträgt 0.9 : 1 - 1.2 : 1, insbesondere 1.0 : 1 - 1.1 : 1.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Unter "Molekulargewicht" versteht man im vorliegenden Dokument die molare Masse (in Gramm pro Mol) eines Moleküls. Als "mittleres Molekulargewicht" wird das zahlenmittlere Molekulargewicht Mₙ einer polydispersen Mischung von oligomeren oder polymeren Molekülen bezeichnet, welches üblicherweise mittels GPC gegen Polystyrol als Standard bestimmt wird.

Als "primäre Hydroxylgruppe" wird eine OH-Gruppe bezeichnet, welche an ein C-Atom mit zwei Wasserstoffen gebunden ist.

Als "Offenzeit" wird in diesem Dokument die Zeit bezeichnet, innerhalb welcher die zu verklebenden Teile gefügt sein müssen, nachdem die Komponenten gemischt wurden.

Der Begriff "Festigkeit" bezeichnet im vorliegenden Dokument die Festigkeit des ausgehärteten Klebstoffs, wobei mit Festigkeit insbesondere die Zugfestigkeit und das Elastizitätsmodul (E-Modul), insbesondere im Dehnungsbereich 0.05 bis 0.25%, gemeint sind.

Als "Raumtemperatur" wird im vorliegenden Dokument eine Temperatur von 23°C bezeichnet.

Die Glasübergangstemperatur (nachgehend abgekürzt auch mit Tg), wird im vorliegenden Dokument nach der dynamisch-mechanischen Thermoanalyse (DMTA) Methode bestimmt, wie sie im Beispielteil beschrieben ist.

Die Polyolkomponente **K1** umfasst:
- mindestens ein Umsetzungsprodukt von epoxidierten Pflanzenölen mit einem C₁₈-Fettsäuren-Anteil von mehr als 50 Gew.-%, insbesondere mehr als 60 Gew.-%, bezogen auf die Gesamtmenge an Fettsäuren, mit monofunktionellen C₁₋₈-Alkoholen **A1-1**; und/oder
- mindestens ein Umsetzungsprodukt von epoxidierten Fettsäureestern monofunktioneller C₁₋₈-Alkohole, insbesondere Methanol, mit aliphatischen Alkoholen einer OH-Funktionalität im Bereich von 2 bis 5, insbesondere Glycerin, wobei den epoxidierten Fettsäureestern als Fettsäurekomponente Fettsäuregemische zugrunde liegen, die einen Gehalt an C₁₈-Fettsäuren, insbesondere ungesättigten C₁₈-Fettsäuren, von mindestens 50 Gew.-%, bezogen auf die gesamte Fettsäuremischung, aufweisen **A1-2**.

Bevorzugt handelt es sich um Umsetzungsprodukte **A1-1** von epoxidierten Pflanzenölen mit einem C₁₈-Fettsäuren-Anteil von mehr als 60 Gew.-%, insbesondere mehr als 65 Gew.-%, bezogen auf die Gesamtmenge an Fettsäuren, mit monofunktionellen C₁₋₈-Alkoholen.

Vorzugsweise handelt es sich bei **A1-1** um Pflanzenöle ausgewählt aus der Liste bestehend aus Sonnenblumenöl, Rapsöl und Rizinusöl, insbesondere Sonnenblumenöl und/oder Rapsöl.

Vorzugsweise weisen die Umsetzungsprodukte **A1-1** eine OH-Zahl von 100 - 350, insbesondere 200 - 330, insbesondere 260 - 310 mg KOH/g, auf.

Weiter ist es bevorzugt, wenn die Umsetzungsprodukte **A1-1** eine OH-Funktionalität von 2 - 3 aufweisen.

Unter dem Begriff "Pflanzenöl" wird im vorliegenden Dokument insbesondere Pflanzenöl verstanden, wie es beschrieben ist in Römpp online, version 4.0, Thieme Verlag, abgerufen am 23 August 2023.

Erwähnte Umsetzungsprodukte **A1-2** entstehen beispielsweise im Falle eines Ölsäurealkylesters folgendermassen. Dieser weist in der Fettkette in 9,10-Position eine C=C-Doppelbindung auf. Diese Doppelbindung ist einer Epoxidierung zugänglich, wobei dann der zugehörige epoxidierte Ölsäurealkylester entsteht. Dieser wird anschließend mit aliphatischen Alkoholen einer OH-Funktionalität im Bereich von 2 bis 5, beispielsweise Glycerin, unter Bildung eines entsprechenden Polyols umgesetzt. Diese Umsetzung erfolgt also im Sinne einer Ringöffnung und Umesterung. Bevorzugt erfolgen die Ringöffnungs- und Umesterungsreaktionen mit Glycerin.

Bevorzugt sind Umsetzungsprodukte **A1-2,** welche ein Verhältnis von epoxidiertem Fettsäureester zu zur Umsetzung verwendetem Alkohol von 1 : 1 bis 2 : 1 beträgt.

Vorzugsweise weisen die Umsetzungsprodukte **A1-2** eine OH-Zahl von 200 - 350, insbesondere 250 - 330, insbesondere 280 - 320 mg KOH/g, auf.

Die Umsetzungsprodukte **A1-2** weisen vorzugsweise eine OH-Funktionalität von 2 - 3 auf.

Es ist bevorzugt, wenn den epoxidierten Fettsäureestern als Fettsäurekomponente Fettsäuregemische zugrunde liegen, die einen Gehalt an C₁₈-Fettsäuren, insbesondere ungesättigten C₁₈-Fettsäuren, von mindestens 60 Gew.-%, von mindestens 70 Gew.-%, mindestens 80 Gew.-%, insbesondere mindestens 85 Gew.-%, bezogen auf die gesamte Fettsäuremischung, aufweisen.

Vorzugsweise beträgt der Gehalt dieser Fettsäuregemische an C₁₈-Fettsäuren, bezogen auf die gesamte Fettsäuremischung, mindestens 70 Gew.-%, mindestens 80 Gew.-%, insbesondere mindestens 85 Gew.-%.

Vorzugsweise beträgt der Gehalt dieser Fettsäuregemische an Ölsäure und Linolsäure, bezogen auf die gesamte Fettsäuremischung, mindestens 60 Gew.-%, mindestens 70 Gew.-%, insbesondere mindestens 80 Gew.-%.

Besonders bevorzugt liegt den epoxidierten Fettsäureestern als Fettkomponente Fettsäuregemische aus Sonnenblumenöl oder Rapsöl zugrunde.

Weiter ist es vorteilhaft, wenn die zur Umsetzung mit den epoxidierten Fettsäureestern eingesetzten aliphatischen Alkohole ausgewählt sind aus der Gruppe bestehend aus Ethylenglykol, Propylenglykol, Glycerin, Trimethylolpropan und Pentaerythrit. Besonders bevorzugt ist Glycerin.

Besonders bevorzugt weist die Polyolkomponente **K1** mindestens ein Umsetzungsprodukt **A1-1** und mindestens ein Umsetzungsprodukt **A1-2** auf, wobei das Gewichtsverhältnis (**A1-1** / **A1-2**) von 1:3 bis 3:1, insbesondere 1:2 bis 2:1, besonders bevorzugt von 1:1 bis 2:1, beträgt. Dies ermöglicht Zusammensetzungen, welche hohe Werte für den Tg (2. Tg) im Bereich über 130°C erreichen sowie hohe Werte für die Zugfestigkeit aufweisen.

Die Polyolkomponente **K1** umfasst vorzugsweise mindestens ein Polybutadienpolyol mit einer OH-Funktionalität im Bereich von 2.1 bis 2.9, insbesondere 2.3 bis 2.7, und mit einem mittleren Molekulargewicht im Bereich von 2000 bis 4000 g/mol, insbesondere 2500 bis 3000 g/mol, und einer OH-Zahl von 40 - 100 mg KOH/g **A2.**

Dies ist dahingehend von Vorteil, dass die erfindungsgemässen Zusammensetzungen durch die Anwesenheit von dem Polybutadienpolyol **A2** eine erste Glasübergangstemperatur (Tg1) bei tiefen Temperaturen von unter -70°C sowie einen zweite dominante Glasübergangstemperatur (Tg2) bei Temperaturen über +100°C, insbesondere über +140°C, aufweisen. Dies hat den Vorteil von gleichbleibenden mechanischen Eigenschaften über einen breiten und anwendungstechnisch interessanten Temperaturbereich. Nach dem Erwärmen über eine Temperature höher als Tg1 verfügt das Material über viskoelastische Eigenschaften und somit über eine strukturbedingte, intrinsische Zähmodifikation. Dies ist beispielsweise in der Tabelle 1 im Vergleich von E7 und E8 mit E3 und E4 ersichtlich.

Solche Polybutadienpolyole sind insbesondere erhältlich durch die Polymerisation von 1,3-Butadien und Allylalkohol in einem geeigneten Verhältnis oder durch die Oxidation von geeigneten hydroxy-terminierten (HT) Polybutadienen.

Geeignete Polybutadienpolyole sind insbesondere Polybutadienpolyole, welche Strukturelemente der Formel (I) und gegebenenfalls Strukturelemente der Formeln (II) und (III) enthalten.

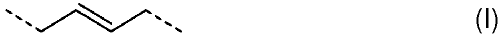

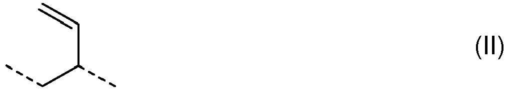

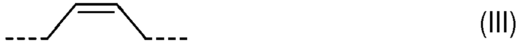

Bevorzugte Polybutadienpolyole enthalten
40 bis 80%, insbesondere 55 bis 65% des Strukturelements der Formel (I),
0 bis 30%, insbesondere 15 bis 25%, des Strukturelements der Formel (II),
0 bis 30%, insbesondere 15 bis 25%, des Strukturelements der Formel (III).

Besonders geeignete Polybutadienpolyole sind beispielweise erhältlich von Cray Valley unter dem Handelsnamen Poly bd^{®} R-45HTLO oder Poly bd^{®} R-45M oder von Evonik unter dem Handelsnamen Polyvest HT.

Die Polyolkomponente **K1** umfasst mindestens ein alkoxyliertes verzweigtes Alkylendiamin mit 5 - 10 C-Atomen, insbesondere 6 - 9 C-Atomen, mit einer OH-Zahl von 450 -800 mg KOH/g **A3**. Bevorzugt hat das alkoxylierte Alkylendiamin **A3** eine OH-Zahl von 500 - 750, insbesondere 550 - 700, insbesondere 600 - 660 mg KOH/g.

Überraschenderweise wurde gefunden, dass das erwähnte alkoxylierte verzweigte Alkylendiamin **A3** zu einer signifikanten Verlängerung der Offenzeit führt. Dies ist beispielsweise in der Tabelle 1 im Vergleich von E1-E8 mit Ref1-Ref8 ersichtlich.

Vorzugsweise handelt es sich um Alkylendiamine mit 5 - 10 C-Atomen, insbesondere 6 - 9 C-Atomen, ausgewählt aus der Liste bestehend aus 2,2,4-Trimethylhexamethylendiamin, 2,4,4-Trimethylhexamethylendiamin und 2-Methyl-1,5-pentamethylendiamin, insbesondere bevorzugt 2-Methyl-1,5-pentamethylendiamin.

Zur Herstellung der alkoxylierten Alkylendiamine werden bevorzugt Ethylenoxid und/oder 1,2-Propylenoxid, insbesondere1,2-Propylenoxid, eingesetzt.

Bevorzugt sind alkoxylierte verzweigte Alkylendiamine ausgewählt aus der Liste bestehend aus N,N,N',N'-Tetrakis(2-hydroxypropyl)-2-metyl-pentamethylendiamin, N,N,N',N'-Tetrakis(2-hydroxypropyl)-2,2,4-Trimethylhexamethylendiamin und N,N,N',N'-Tetrakis(2-hydroxypropyl)-2,4,4-Trimethylhexamethylendiamin.

Besonders bevorzugt ist N,N,N',N'-Tetrakis(2-hydroxypropyl)-2-metyl-pentamethylendiamin, welches beispielsweise kommerziell erhältlich ist als Propoxylated Dytek^{®} A von Dytek/Specialty Intermediates INVISTA.

Die vorliegende Polyisocyanatkomponente **K2** umfasst mindestens ein aromatisches Polyisocyanat **B1**.

Geeignete aromatische Polyisocyanate **B1** sind insbesondere monomere Di- oder Triisocyanaten, sowie Oligomere, Polymere und Derivate von monomeren Di- oder Triisocyanaten, sowie beliebige Mischungen davon.

Geeignete aromatische monomere Di- oder Triisocyanate sind insbesondere 2,4- und 2,6-Toluylendiisocyanat und beliebige Gemische dieser Isomeren (TDI), 4,4`-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)benzol, Tris-(4-isocyanatophenyl)methan und Tris-(4-isocyanatophenyl)thiophosphat. Bevorzugte aromatische monomere Di- oder Triisocyanate sind abgeleitet von MDI und/oder TDI, insbesondere von MDI.

Geeignete Oligomere, Polymere und Derivate der genannten monomeren Di- und Triisocyanate sind insbesondere abgeleitet von MDI und TDI. Davon insbesondere geeignet sind kommerziell erhältliche Typen, TDI-Oligomere wie Desmodur^{®} IL (von Bayer); weiterhin geeignet sind bei Raumtemperatur flüssige Formen von MDI (sogenanntes "modifiziertes MDI"), welche Gemische von MDI mit MDI-Derivaten, wie insbesondere MDI-Carbodiimiden oder MDI-Uretoniminen darstellen, bekannt unter Handelsnamen wie Desmodur^{®} CD, Desmodur^{®} PF, Desmodur^{®} PC (alle von Covestro AG), sowie Gemische aus MDI und MDI-Homologen (polymeres MDI oder PMDI), erhältlich unter Handelsnamen wie Desmodur^{®} VL, Desmodur^{®} VL50, Desmodur^{®} VL R10, Desmodur^{®} VL R20, Desmodur^{®} VH 20 N und Desmodur^{®} VKS 20F (alle vonCovestro AG), Isonate^{®} M 309, Voranate^{®} M 229 und Voranate^{®} M 580 (alle von Dow) oder Lupranat^{®} M 10 R (von BASF). Die vorgenannten oligomeren Polyisocyanate stellen in der Praxis üblicherweise Gemische von Substanzen mit unterschiedlichen Oligomerisierungsgraden und/oder chemischen Strukturen dar. Vorzugsweise weisen sie eine mittlere NCO-Funktionalität von 2.1 bis 4.0 auf, vorzugsweise 2.1 bis 3.0, insbesondere 2.1 bis 2.6.

Bevorzugt sind als aromatische Polyisocyanate **B1** monomeres MDI oder Oligomere, Polymere und Derivate abgeleitet von MDI, insbesondere mit einer mittleren NCO-Funktionalität von 2.0 bis 4.0, vorzugsweise 2.0 bis 3.0, insbesondere 2.1 bis 2.6.

Besonders vorteilhaft handelt es sich um Oligomere, Polymere und Derivate abgeleitet von MDI, insbesondere um Polymere abgeleitet von MDI, insbesondere mit einer mittleren NCO-Funktionalität von 2.1 bis 2.6.

Handelt es sich um Oligomere, Polymere und Derivate abgeleitet von MDI mit einer mittleren NCO-Funktionalität von 2.4 bis 2.6 kann es dahingehend von Vorteil sein, dass dadurch hohe Werte für die Offenzeit erhalten werden. Dies ist beispielsweise in Tabelle 1 im Vergleich von E1 mit E2 ersichtlich.

Handelt es sich um Oligomere, Polymere und Derivate abgeleitet von MDI mit einer mittleren NCO-Funktionalität von 2.1 bis 2.3 kann es dahingehend von Vorteil sein, dass dadurch höhere Werte für die Zugfestigkeit, die Bruchdehnung und die E-moduli erhalten werden. Dies ist beispielsweise in Tabelle 1 im Vergleich von E2 mit E1 ersichtlich.

Weiter besonders vorteilhaft handelt es sich Monomere von MDI, insbesondere 4,4`-, 2,4'- und 2,2`-Diphenylmethandiisocyanat und beliebige Gemische dieser Isomeren (MDI), insbesondere Mischungen von 4,4`- und 2,4'-Diphenylmethandiisocyanat, insbesondere mit einem NCO-Gehalt 31.0 - 34.0 Gewichts-%. Der erhöhte Gehalt an 2,4'-MDI ist dahingehend von Vorteil, dass dadurch besonders lange Offenzeiten und sehr hohe Werte für die Zugfestigkeit und die E-moduli erhalten werden. Dies ist beispielsweise in Tabelle 1 im Vergleich von E3 und E4 mit E1 und E2 ersichtlich.

Handelt es sich um eine Mischung von 4,4`- und 2,4'-Diphenylmethandiisocyanat, insbesondere in einem Mischungsverhältnis von 4,4`- zu 2,4'-Diphenylmethandiisocyanat von 1:1 - 2:1, vorzugsweise mit einem NCO-Gehalt 31.0 - 34.0 Gewichts-%, ist dies dahingehend von Vorteil, dass dadurch lange Offenzeiten und sehr hohe Werte für die Zugfestigkeit und die E-moduli erhalten werden. Dies ist beispielsweise in Tabelle 1 im Vergleich von E3 mit E1, E2 und E4 ersichtlich.

Handelt es sich um eine Mischung von 4,4`- und 2,4'-Diphenylmethandiisocyanat, insbesondere in einem Mischungsverhältnis von 4,4`- zu 2,4'-Diphenylmethandiisocyanat von 1:1.5 - 1:2.0, vorzugsweise mit einem NCO-Gehalt 31.0 - 34.0 Gewichts-%, ist dies dahingehend von Vorteil, dass dadurch besonders lange Offenzeiten und hohe Werte für die Zugfestigkeit und die E-moduli erhalten werden. Dies ist beispielsweise in Tabelle 1 im Vergleich von E4 mit E1, E2 und E3 ersichtlich.

Es ist weiter vorteilhaft, wenn die Summe der NCO-Gruppen, welche nicht von **B1** herrühren, ≤5%, insbesondere ≤2%, insbesondere bevorzugt ≤1%, am meisten bevorzugt ≤0.5%, beträgt, bezogen auf die Summe aller NCO -Gruppen der zweikomponentigen Polyurethanzusammensetzung.

Vorzugsweise beträgt der Anteil des aromatischen Polyisocyanats **B1** ≥ 90 Gew.-%, insbesondere ≥ 95 Gew.-%, insbesondere bevorzugt ≥99 Gew.-%, bezogen auf das Gesamtgewicht der Polyisocyanatkomponente **K2**.

Vorzugsweise beträgt der Anteil des aromatischen Polyisocyanats **B1** ≥90 Gew.-%, insbesondere ≥ 95 Gew.-%, insbesondere bevorzugt ≥99 Gew.-%, bezogen auf das Gesamtgewicht der Polyisocyanatkomponente **K2**.

Vorzugsweise beträgt das Verhältnis der OH-Gruppen von (**A1-2 + A1-2 + A2)/(A3**) von 1.1 - 10, vorzugsweise 1.2 - 3.5, insbesondere bevorzugt 1.3 - 1.75. Unter dem vorgehend beschriebenen Verhältnis wird das molare Verhältnis erwähnter Gruppen verstanden.

Weiter ist es bevorzugt, wenn das Verhältnis der OH-Gruppen von (**A1-2 + A1-2)/(A3**) von 1.1 - 10, vorzugsweise 1.2 - 3.5, insbesondere bevorzugt 1.3 - 1.75, beträgt. Unter dem vorgehend beschriebenen Verhältnis wird das molare Verhältnis erwähnter Gruppen verstanden.

Es ist weiter vorteilhaft, wenn das Verhältnis der OH-Gruppen von **(A1-2 + A1-2)/(A2)** von 5 - 30, vorzugsweise 10 - 25, insbesondere bevorzugt 15 - 20, beträgt. Unter dem vorgehend beschriebenen Verhältnis wird das molare Verhältnis erwähnter Gruppen verstanden.

Es ist weiter vorteilhaft, wenn das Verhältnis der OH-Gruppen von **(A3)/(A2)** von 5 - 25, vorzugsweise 7.5 - 20, insbesondere bevorzugt 10 - 15, beträgt. Unter dem vorgehend beschriebenen Verhältnis wird das molare Verhältnis erwähnter Gruppen verstanden.

Das Verhältnis aller NCO-Gruppen der aromatischen Polyisocyanate **B1** : aller OH-Gruppen der Polyolkomponente **K1** beträgt = 0.9 : 1 - 1.2 : 1, insbesondere 1.0 : 1 - 1.1 : 1.

Vorzugsweise beträgt das Verhältnis aller NCO-Gruppen der aromatischen Polyisocyanate **B1** : aller OH-Gruppen der Summe von (**A1-1** + **A1-2** + **A2** + **A3**) = 0.9 : 1 - 1.2 : 1, insbesondere 1.0 : 1 - 1.1 : 1.

Unter den vorgehend beschriebenen Verhältnissen wird das molare Verhältnis erwähnter Gruppen verstanden.

Weiter kann es bevorzugt sein, wenn bei der zweikomponentigen Polyurethanzusammensetzung die Summe aller OH-Gruppen von (**A1-1** + **A1-2** + **A2** + **A3**) ≥60%, ≥70%, insbesondere ≥80%, insbesondere bevorzugt ≥90%, am meisten bevorzugt ≥95%, der Summe aller NCO-reaktiven Gruppen, insbesondere OH-Gruppen, der zweikomponentigen Polyurethanzusammensetzung beträgt.

Vorzugsweise ist die zweikomponentige Polyurethanzusammensetzung im Wesentlichen frei von NCO-reaktiven Gruppen, insbesondere OH-Gruppen, welche nicht von (**A1-1** + **A1-2** + **A2** + **A3**) herrühren. Unter dem Begriff "im Wesentlichen frei" wird in diesem Fall verstanden, dass die Summe der NCO-reaktiven Gruppen, insbesondere OH-Gruppen, welche nicht von (**A1-1** + **A1-2** + **A2** + **A3**) herrühren, ≤15%, insbesondere ≤10%, insbesondere bevorzugt ≤5%, am meisten bevorzugt ≤2%, beträgt, bezogen auf die Summe aller NCO-reaktiven Gruppen, insbesondere OH-Gruppen, der zweikomponentigen Polyurethanzusammensetzung.

Weiterhin kann die zweikomponentige Polyurethanzusammensetzung Katalysatoren enthalten, die die Reaktion von Hydroxylgruppen mit Isocyanatgruppen beschleunigen, insbesondere Zinn-, Zink-, Zirkonium- und Wismut-organische Metallkatalysatoren, zum Beispiel Dibutylzinndilaurat, oder tertiäre Amine, Amidine oder Guanidine, zum Beispiel 1,4-Diazabicyclo[2.2.2]octan (DABCO) oder 1,8-Diazabicyclo[5.4.0]undec-7-en (DBU). Zur Erzielung einer Wärmeaktivierung können insbesondere die tertiären Amine, Amidine oder Guanidine mit Phenol oder Carbonsäuren, insbesondere phenolischen oder sonstigen aromatischen Carbonsäuren, reversibel ein Salz oder einen Komplex bilden, welches bei Erhöhung der Temperatur zersetzt und dann die Wirkung des Katalysators ermöglicht wird.

Die zweikomponentige Polyurethanzusammensetzung kann, neben den bereits Erwähnten, weitere Bestandteile, wie sie der Fachmann aus der zweikomponenten-Polyurethanchemie her kennt, enthalten. Diese können in nur einer Komponente oder in beiden vorhanden sein.

Als weitere Bestandteile bevorzugt sind anorganische und organische Füllstoffe, wie insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, calcinierte Kaoline, Mica (Kalium-Aluminium-Silikat), Molekularsiebe, Aluminiumoxide, Aluminiumhydroxide, Magnesiumhydroxid, Kieselsäuren inklusive hochdisperse Kieselsäuren aus Pyrolyseprozessen, industriell hergestellte Russe, Graphit, Metallpulver wie Aluminium, Kupfer, Eisen, Silber oder Stahl, PVC-Pulver oder Hohlkugeln.

Die Zugabe von Füllstoffen ist, insbesondere wenn es sich bei der Polyurethanzusammensetzung um einen Klebstoff handelt, dahingehend von Vorteil, dass dadurch die Festigkeit der ausgehärteten Polyurethanzusammensetzung erhöht wird.

Es kann vorteilhaft sein, wenn die Polyurethanzusammensetzung mindestens einen Füllstoff ausgewählt aus der Gruppe bestehend aus Calciumcarbonat, Kaolin, Baryt, Talk, Quarzmehl, Dolomit, Wollastonit, Kaolin, calciniertes Kaolin und Mica enthält.

Als weitere Bestandteile können weiterhin insbesondere Lösungsmittel, Weichmacher und/oder Extender, Pigmente, Rheologiemodifizierer wie insbesondere amorphe hydrophobe Kieselsäuren, Trocknungsmittel wie insbesondere Zeolithe, Haftvermittler wie insbesondere Trialkoxysilane, Stabilisatoren gegen Oxidation, Wärme, Licht- und UV-Strahlung, flammhemmende Substanzen, sowie oberflächenaktive Substanzen, insbesondere Netzmittel und Entschäumer, vorhanden sein.

Die Komponenten **K1** und **K2** werden vorteilhaft derart formuliert, dass das Volumenverhältnis von Komponente **K1** und **K2** zwischen 1:3 und 3:1, insbesondere zwischen 1:2 und 2:1, beträgt. Besonders bevorzugt beträgt dieses Verhältnis in etwa 1:1.

Eine bevorzugte zweikomponentige Polyurethanzusammensetzung besteht: aus einer Polyolkomponente **K1,** welche:
- 70 bis 95 Gewichts-%, bevorzugt 80 bis 95 Gewichts-%, insbesondere 85 bis 95 Gewichts-%, der Summe (**A1-1** + **A1-2** + **A2** + **A3**); und
- 5 bis 30 Gewichts-%, bevorzugt 5 bis 20 Gewichts-%, insbesondere 5 bis 10 Gewichts-%, Füllstoffe, insbesondere Füllstoffe ausgewählt aus der Gruppe bestehend aus Calciumcarbonat, Kaolin, Baryt, Talk, Quarzmehl, Dolomit, Wollastonit, Kaolin, calciniertes Kaolin, und Mica, besonders bevorzugt Calciumcarbonat und Rheologiemodifizierer wie insbesondere hydrophobe amorphe Kieselsäuren; und
- 0 bis 5 Gewichts-%, bevorzugt 1 bis 3 Gewichts-%, Katalysatoren für die Beschleunigung der Reaktion von Hydroxylgruppen mit Isocyanatgruppen sowie Trocknungsmittel (insbesondere Zeolithe);
bezogen auf das Gesamtgewicht der Polyolkomponente **K1,** enthält, insbesondere daraus besteht,
und aus einer Polyisocyanatkomponente **K2,** welche:
- einen Anteil des aromatischen Polyisocyanats **B1** ≥90 Gew.-%, insbesondere ≥95 Gew.-%, insbesondere bevorzugt ≥99 Gew.-%, bezogen auf das Gesamtgewicht der Polyisocyanatkomponente **K2,** aufweist.

Eine solche Zusammensetzung ist insbesondere als Vergussmasse geeignet.

Eine weitere bevorzugte zweikomponentige Polyurethanzusammensetzung besteht: aus einer Polyolkomponente **K1,** welche:
- 30 bis 70 Gewichts-%, bevorzugt 40 bis 60 Gewichts-%, insbesondere 45 bis 55 Gewichts-%, der Summe (**A1-1** + **A1-2** + **A2** + **A3**); und
- 20 bis 60 Gewichts-%, bevorzugt 30 bis 50 Gewichts-%, insbesondere 35 bis 45 Gewichts-%, Füllstoffe, insbesondere Füllstoffe ausgewählt aus der Gruppe bestehend aus Calciumcarbonat, Kaolin, Baryt, Talk, Quarzmehl, Dolomit, Wollastonit, Kaolin, calciniertes Kaolin, und Mica, besonders bevorzugt Calciumcarbonat und Rheologiemodifizierer wie insbesondere hydrophobe amorphe Kieselsäuren; und
- 0 bis 5 Gewichts-%, bevorzugt 1 bis 4 Gewichts-%, insbesondere bevorzugt 2 bis 4 Gewichts-%, Katalysatoren für die Beschleunigung der Reaktion von Hydroxylgruppen mit Isocyanatgruppen;
- 0 bis 5 Gewichts-%, bevorzugt 0.5 bis 3 Gewichts-%, insbesondere bevorzugt 1 bis 2 Gewichts-%, Trocknungsmittel (insbesondere Zeolithe);
bezogen auf das Gesamtgewicht der Polyolkomponente **K1,** enthält, insbesondere daraus besteht,
und aus einer Polyisocyanatkomponente **K2,** welche:
- einen Anteil des aromatischen Polyisocyanats **B1** ≥90 Gew.-%, insbesondere ≥95 Gew.-%, insbesondere bevorzugt ≥99 Gew.-%, bezogen auf das Gesamtgewicht der Polyisocyanatkomponente **K2,** aufweist.

Eine solche Zusammensetzung ist insbesondere als Klebstoff geeignet.

Eine weitere bevorzugte zweikomponentige Polyurethan-zusammensetzung besteht: aus einer Polyolkomponente **K1,** welche:
- 90 bis 100 Gewichts-%, bevorzugt 95 bis 97 Gewichts-%, der Summe (**A1-1** + **A1-2** + **A2** + **A3**); und
- 0 bis 5 Gewichts-%, bevorzugt 0 bis 2 Gewichts-%, insbesondere 0 bis 0.5 Gewichts-%, besonders bevorzugt weniger als 0.1 Gewichtsprozent, am meisten bevorzugt keine Füllstoffe, insbesondere Füllstoffe ausgewählt aus der Gruppe bestehend aus Calciumcarbonat, Kaolin, Baryt, Talk, Quarzmehl, Dolomit, Wollastonit, Kaolin, calciniertes Kaolin, und Mica, besonders bevorzugt Calciumcarbonat und Rheologiemodifizierer wie insbesondere hydrophobe amorphe Kieselsäuren; und
- 0 bis 5 Gewichts-%, bevorzugt 0 bis 2 Gewichts-%, insbesondere bevorzugt 0 bis 0.5 Gewichts-%, besonders bevorzugt 0 bis 0.3 Gewichts-%, Katalysatoren für die Beschleunigung der Reaktion von Hydroxylgruppen mit Isocyanatgruppen;
- 0 bis 5 Gewichts-%, bevorzugt 0.5 bis 3 Gewichts-%, insbesondere bevorzugt 1 bis 2 Gewichts-%, Trocknungsmittel (insbesondere Zeolithe);
bezogen auf das Gesamtgewicht der Polyolkomponente **K1,** enthält, insbesondere daraus besteht,
und aus einer Polyisocyanatkomponente **K2,** welche:
- einen Anteil des aromatischen Polyisocyanats **B1** ≥90 Gew.-%, insbesondere ≥95 Gew.-%, insbesondere bevorzugt ≥99 Gew.-%, bezogen auf das Gesamtgewicht der Polyisocyanatkomponente **K2,** aufweist.

Eine solche Zusammensetzung ist insbesondere als Infusionsharz geeignet.

Die Herstellung der beiden Komponenten erfolgt getrennt voneinander und, zumindest für die zweite Komponente, vorzugsweise unter Ausschluss von Feuchtigkeit. Beide Komponenten werden typischerweise jeweils in einem eigenen Gebinde gelagert. Die weiteren Bestandteile der Polyurethanzusammensetzung können als Bestandteil der ersten oder der zweiten Komponente vorhanden sein, wobei gegenüber Isocyanatgruppen reaktive weitere Bestandteile bevorzugt ein Bestandteil der ersten Komponente sind. Ein geeignetes Gebinde zum Lagern der jeweiligen Komponente ist insbesondere ein Fass, ein Hobbock, ein Beutel, ein Eimer, eine Büchse, eine Kartusche oder eine Tube. Die Komponenten sind beide lagerstabil, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.

Die beiden Komponenten werden vor dem Vermischen der Zusammensetzung getrennt voneinander gelagert und erst bei oder unmittelbar vor der Anwendung miteinander vermischt. Sie sind vorteilhaft in einer Verpackung, welche aus zwei voneinander getrennten Kammern besteht, vorhanden.

In einem weiteren Aspekt umfasst die Erfindung eine Packung bestehend aus einer Verpackung mit zwei voneinander getrennten Kammern, welche jeweils die erste Komponente beziehungsweise die zweite Komponente der Zusammensetzung enthält.

Das Mischen erfolgt typischerweise über Statikmischer oder mit Hilfe von dynamischen Mischern. Beim Mischen ist darauf zu achten, dass die beiden Komponenten möglichst homogen vermischt werden. Werden die zwei Komponenten unvollständig gemischt, treten lokale Abweichungen vom vorteilhaften Mischungsverhältnis auf, was sich in einer Verschlechterung der mechanischen Eigenschaften auswirken kann.

Beim Kontakt der ersten Komponente mit Isocyanatgruppen der zweiten Komponente beginnt die Aushärtung durch chemische Reaktion. Dabei reagieren die vorhandenen Hydroxylgruppen und gegebenenfalls vorhandene weitere gegenüber Isocyanatgruppen reaktive Substanzen sowie Wasser aus Feuchtigkeit mit vorhandenen Isocyanatgruppen. Als Resultat dieser Reaktionen härtet die Polyurethanzusammensetzung zu einem festen Material aus. Dieser Vorgang wird auch als Vernetzung bezeichnet.

Ein weiterer Gegenstand der Erfindung ist somit auch eine ausgehärtete Polyurethanzusammensetzung, erhalten aus der Aushärtung der Polyurethanzusammensetzung wie im vorliegenden Dokument beschrieben.

Die beschriebene zweikomponentige Polyurethanzusammensetzung ist vorteilhaft verwendbar als struktureller Klebstoff, als Vergussmasse oder als Infusionsharz.

Die Erfindung betrifft somit auch ein Verfahren zum Verkleben von einem ersten Substrat mit einem zweiten Substrat, welches die Schritte umfasst:
- Mischen der vorgängig beschriebenen Polyolkomponente **K1** und Polyisocyanatkomponente **K2,**
- Applizieren der vermischten Polyurethanzusammensetzung auf mindestens eine der zu verklebenden Substratoberflächen,
- Fügen der zu verklebenden Substrate innerhalb der Offenzeit,
- Aushärten der Polyurethanzusammensetzung.

Dabei können die beiden Substrate aus dem gleichen oder unterschiedlichen Materialien bestehen.

Die Erfindung betrifft somit weiterhin auch ein Verfahren zum Verfüllen von Fugen und Spalten zwischen zwei Substraten, welches die Schritte umfasst:
- Mischen der vorgängig beschriebenen Polyolkomponente **K1** und Polyisocyanatkomponente **K2,**
- Applizieren der vermischten Polyurethanzusammensetzung in die Fuge oder den Spalt,
- Aushärten der Polyurethanzusammensetzung.

In diesen Verfahren zum Verkleben oder zum Verfüllen von Fugen und Spalten sind geeignete Substrate insbesondere
- Glas, Glaskeramik, Glasmineralfasermatten, Glasfasergewebe;
- Metalle und Legierungen, wie Aluminium, Eisen, Stahl, sowie oberflächenveredelte Metalle und Legierungen, wie verzinkte oder verchromte Metalle;
- beschichtete und lackierte Substrate, wie pulverbeschichtete Metalle oder Legierungen und lackierte Bleche;
- Kunststoffe, wie Polyvinylchlorid (Hart- und Weich-PVC), Acrylonitril-Butadien-StyrolCopolymere (ABS), Polycarbonat (PC), Polyamid (PA), Poly(methylmethacrylat) (PMMA), Polyester, Epoxidharze insbesondere Thermosets auf Epoxybasis, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- Faserverstärkte Kunststoffe, wie kohlefaserverstärkte Kunststoffe (CFK), glasfaserverstärkte Kunststoffe (GFK) und Sheet Moulding Compounds (SMC);
- Holz, mit Harzen, beispielsweise Phenol-, Melamin- oder Epoxidharzen, gebundene Holzwerkstoffe, Harz-Textil-Verbundwerkstoffe und weitere sogenannte Polymer-Composites; sowie
- Beton, Mörtel, Ziegel, Gips und Natursteine wie Granit, Kalk- und Standstein oder Marmor.

In diesen Verfahren ist eines oder beide Substrate bevorzugt ein Metall oder eine Glaskeramik oder ein Glas oder ein glasfaserverstärkter Kunststoff oder ein kohlefaserverstärkter Kunststoff oder ein Thermoset auf Epoxybasis.

Die Substrate können bei Bedarf vor dem Applizieren der Zusammensetzung vorbehandelt werden. Derartige Vorbehandlungen umfassen insbesondere physikalische und/oder chemische Reinigungsverfahren, sowie das Aufbringen eines Haftvermittlers, einer Haftvermittlerlösung oder eines Primers.

Aus dem beschriebenen Verfahren zum Verkleben entsteht ein Artikel, bei welchem die Zusammensetzung zwei Substrate miteinander verbindet.

Dieser Artikel ist insbesondere ein Sandwichelement einer Leichtbaustruktur, ein Bauwerk, beispielsweise eine Brücke, ein industrielles Gut oder ein Konsumgut, insbesondere ein Fenster, ein Rotorblatt einer Windkraftanlage oder ein Transportmittel, insbesondere ein Fahrzeug, bevorzugt ein Automobil, ein Bus, ein Lastkraftwagen, ein Schienenfahrzeug oder ein Schiff, sowie ein Flugzeug oder ein Helikopter; oder ein Anbauteil eines solchen Artikels.

Die beschriebene zweikomponentige Polyurethanzusammensetzung zeichnet sich unter anderem dadurch aus, dass sie eine schwach ausgeprägte Abhängigkeit der mechanischen Eigenschaften, insbesondere der Zugfestigkeit und der E-moduli, von der Temperatur aufweisen. Aufgrund dieser Eigenschaften ist sie ganz besonders geeignet als struktureller Klebstoff für Verklebungen, welche unter Umgebungstemperaturen im Freien beansprucht werden.

Ein weiterer Gegenstand der Erfindung ist somit auch die Verwendung der beschriebenen Polyurethanzusammensetzung als struktureller Klebstoff zum Verkleben von zwei Substraten.

Ebenfalls vorteilhaft verwendbar ist die beschriebene Polyurethanzusammensetzung als Vergussmasse, insbesondere als Vergussmasse für das Verfüllen von Spalten und Fugen, zu Reparaturzwecken, als Ballastausgleichsmasse oder zum Schutz von elektronischen Bauteilen.

Die Polyurethanzusammensetzung wird weiter vorzugsweise als Vergussmasse, insbesondere als Elektrovergussmasse, eingesetzt. In einem weiteren Aspekt umfasst die Erfindung daher die Verwendung einer zweikomponentigen Polyurethanzusammensetzung als Vergussmasse, insbesondere als Elektrovergussmasse.

Typische Beispiele für Anwendungen der erfindungsgemässen Polyurethanzusammensetzungen findet sich auf dem Gebiet der Elektrovergussmassen.

In einem weiteren Aspekt umfasst die Erfindung daher ein Verfahren zum Verfüllen von Fugen und Spalten in einem Substrat umfassend die Schritte
a) Mischen der Polyolkomponente (K1) und der Polyisocyanatkomponente (K2) einer zweikomponentigen Polyurethanzusammensetzung wie sie vorgehend beschrieben ist,
b) Applizieren der vermischten Polyurethanzusammensetzung in die zu verfüllende Fuge oder den zu verfüllenden Spalt des Substrates,
c) Aushärten der Polyurethanzusammensetzung in der Fuge oder im Spalt.

Als Substrate besonders geeignet sind Metall, Kunststoff, Holz, Glas, Keramik und faserverstärkte Kunststoffe, insbesondere Metall und faserverstärkte Kunststoffe.

In einem weiteren Aspekt umfasst die Erfindung daher auch einen verfüllten Artikel, welcher nach dem vorgehend beschriebenen Verfahren verfüllt wurde.

Ein weiterer Gegenstand der Erfindung ist auch die Verwendung der beschriebenen Polyurethanzusammensetzung als Infusionsharz, insbesondere zur Herstellung von faserverstärkten Verbundwerkstoffteilen, besonders bevorzugt in Infusionsverfahren. Für die Verwendung als Infusionsharz, insbesondere als Infusionsharz für Verbundbauteile, weist die zweikomponentige Polyurethanzusammensetzung (2K-PU-Zusammensetzung) vorzugsweise eine Viskosität in gemischter Form von 500 bis 5000 mPas auf (gemessen mit Brookfield RTV, Drehzahl 10 U/min, Kegel/Platte, CP 50/1), gemessen bei einer Temperatur von 20°C. Insbesondere soll die Viskosität von 1000 bis 2000 mPas betragen, gemessen bei 20°C. Die Viskosität soll unmittelbar nach dem Mischen bestimmt werden, beispielsweise bis zu 1 min nach dem Mischen, durch die einsetzende Vernetzungsreaktion nimmt sie stetig zu.

Die erfindungsgemässe 2K-PU-Zusammensetzung verfügt über eine für die Verarbeitung und Applikation der vermischten Zusammensetzung genügend lange Offenzeit. Nach dem Überschreiten der Offenzeit härtet die vermischte Zusammenstzung rasch aus. Die Offenzeit soll vorzugsweise 10-30 min, insbesondere 15- 30 min, betragen. Als Mass für die Offenzeit kann die "Gelation Time [min]" anhand der Zeit bis zur Klebefreiheit ("tack-free time") bestimmt werden, wie nachstehend in den Beispielen beschrieben.

Ein weiterer Gegenstand der Erfindung ist auch ein Verfahren zum Herstellen von faserverstärkten Verbundwerkstoffteilen und einer vorgehend beschriebenen zweikomponentigen Polyurethanzusammensetzung, dadurch gekennzeichnet, dass die Polyolkomponente **K1** und die Polyisocyanatkomponente **K2** gemischt werden und danach, insbesondere weniger als 5 min nach dem Vermischen, vorzugsweise unmittelbar nach dem Vermischen, unter Vakuum und/oder Druck in eine die Fasern enthaltende Form eingebracht wird.

Das Mischen der Polyolkomponente **K1** mit der Polyisocyanatkomponente **K2** kann batch-weise oder kontinuierlich, vorzugsweise kontinuierlich, erfolgen.

Wird die zweikomponentige Polyurethanzusammensetzung als Klebstoff oder Infusionsharz eingesetzt, weist die ausgehärtete Zusammensetzung vorzugsweise folgende Eigenschaften auf (gemäss den nachfolgend im Beispielteil verwendeten Messverfahren/Messbedingungen, Aushärtungsbedingungen 3h bei 80°C):

| | |
|---|---|
| Zugfestigkeit (TS) [MPa] | >20, >30, insbesondere 30-50 |
| Bruchdehnung (EB) [%] | 4-40, 5-40, 5-20, 5-10, insbesondere 5-8 |
| E-modul 0.05-0.25% [MPa] | 500-2500, 1000-2400, 1200-2300, insbesondere 1250-2000 |
| 1.Tg (°C) | -50 bis -60 |
| 2.Tg (°C) | >100, >120, insbesondere >130, und bevorzugt, <180, insbesondere <170 |

### Beispiele

verwendete Substanzen:

| | |
|---|---|
| A1-1 | Umsetzungsprodukt von epoxidierten Pflanzenölen (Rapsöl) mit einem Anteil an ungesättigten C-18-Fettsäuren von 91 Gew.-%, bezogen auf die Gesamtmenge an Fettsäuren, mit monofunktionellen C₁₋s-Alkoholen. |
| | OH-Funktionalität 2.0, mittleres Molekulargewicht ca. 390 g/mol, OH-Zahl von 290 mg KOH/g, Neukapol 1119, Altropol Kunststoff GmbH, Deutschland |
| A1-2 | Umsetzungsprodukt von epoxidierten Fettsäureestern von Methanol mit Glycerin, wobei den epoxidierten Fettsäureestern als Fettsäurekomponente Fettsäuregemische von Rapsöl oder Sonnenblumenöl zugrunde liegen, mit einem Gehalt an ungesättigten C-18-Fettsäuren von mindestens 80 Gew.-%, bezogen auf die gesamte Fettsäuremischung. |
| | OH-Funktionalität 3.0, mittleres Molekulargewicht ca. 540 g/mol, OH-Zahl von 310 mg KOH/g, Neukapol 1565, Altropol Kunststoff GmbH, Deutschland |

| | |
|---|---|
| A2 | Polybutadienpolyol mit primären OH-Gruppen, OH-Funktionalität 2.4-2.6, mittleres Molekulargewicht ca. 2800 g/mol, OH-Zahl 48 mg KOH/g (Poly bd^{®} R-45HTLO von Total Cray Valley, USA) |
| QL | N,N,N',N'-Tetrakis(2-hydroxypropyl)-ethylendiamin, OH-Zahl 770 mg KOH/g, Quadrol L, Sigma Aldrich |
| A3 | N,N,N',N'-Tetrakis(2-hydroxypropyl)-2-metyl-pentamethylendiamin, OH-Zahl 627 mg KOH/g, Propoxylated Dytek^{®}A, Dytek /Specialty Intermediates INVISTA |
| Sylosiv | Sylosiv, Zeolith (Sylosiv^{®} A3 von W. R. Grace & Co., USA) |
| B1-1 | Desmodur VL, polymeres MDI, mittlere NCO-Funktionalität von 2.5, Desmodur^{®} VL, Covestro AG, Deutschland |
| B1-2 | Desmodur CD, modifiziertes Diphenylmethandiisocyanat enthaltend MDI-Carbodiimid-Addukte, mittlere NCO-Funktionalität von 2.2, NCO-Gehalt 29.4 Gewichts-%, Desmodur^{®} CD, Covestro AG, Deutschland |
| B1-3 | DESMODUR^{®} VP.PU 1332, Isocyanat auf Basis von Diphenylmethan-4,4'-diisocyanat (ca. 40 - 60 Gew.-%) enthaltend Diphenylmethan-2,4'-diisocyanat (25 - 40 Gew.-%) und höherfunktionellen Homologen, NCO-Gehalt 32.0 Gewichts-%, Covestro AG, Deutschland |
| B1-4 | DESMODUR^{®} 2460, Isocyanat auf Basis von Diphenylmethan-2,4'-diisocyanat (50 - 75 Gew.-%) enthaltend auch Diphenylmethan-4,4'-diisocyanat (ca. 25 - 50 Gew.-%) und höherfunktionellen Homologen, NCO-Gehalt 33.6 Gewichts-%, Covestro AG, Deutschland |

### Herstellung von Polyurethanzusammensetzungen

Für jede Zusammensetzung wurden die in der Tabelle 1 angegebenen Inhaltsstoffe in den angegebenen Mengen (in Gewichtsteilen) der Polyolkomponente **K1** mittels eines Vakuumdissolvers unter Feuchtigkeitsausschluss zu einer homogenen Paste verarbeitet und aufbewahrt. Ebenso wurden die in der Tabelle 1 angegebenen Inhaltsstoffe der Polyisocyanatkomponente **K2** verarbeitet und aufbewahrt. Anschliessend wurden die beiden Komponenten mittels eines SpeedMixers^{®} (DAC 150 FV, Hauschild) während 30 Sekunden zu einer homogenen Paste verarbeitet (Verhältnis aller NCO-Gruppen **B1:** aller OH-Gruppen der Polyolkomponente **K1** jeweils = 1.07) und diese unverzüglich folgendermassen geprüft:
Zur Bestimmung der mechanischen Eigenschaften wurde der Klebstoff in Hantelform gemäss ISO 527, Teil 2, 1B, gebracht und während 7 Tagen im Normklima (23°C, 50% relative Feuchtigkeit) oder nach Lagerung im Normklima für 12-24 h während 3h bei 80°C gelagert bzw. ausgehärtet. Danach wurde bei Raumtemperatur das Elastizitätsmodul im Bereich von 0.05 bis 0.25% Dehnung ("**E-Modul**", "Em 0.05-0.25%"), das Elastizitätsmodul im Bereich von 0.5 bis 5% Dehnung ("**E-Modul**", "Em 0.5-5%"), die **Zugfestigkeit** (tensile strength, "TS") und die **Bruchdehnung** (elongation at break, "EB") der so hergestellten Probekörper gemäss ISO 527 auf einer Zwick Z020 Zugprüfmaschine bei einer Prüfgeschwindigkeit von 10 mm/ min gemessen.

Die **Glasübergangstemperatur,** in den Tabellen abgekürzt mit **T_{g},** wurde bestimmt anhand von DMTA-Messungen an streifenförmigen Proben (Höhe 2-3 mm, Breite 2-3 mm, Länge 8.5 mm), welche während 24 h bei 23°C und anschließend während 3h bei 80°C gelagert bzw. ausgehärtet wurden, mit einem Mettler DMA/SDTA 861e Gerät. Die Messbedingungen waren: Messung im Zugmodus, 10 Hz Anregungsfrequenz und Aufheizrate 5 K/min. Die Proben wurden auf -70°C abgekühlt und unter Bestimmung des komplexen Elastizitatsmoduls **E*** [MPa] auf 200°C erwärmt, wobei ein Maximum in der Kurve für den Verlustwinkel "tan δ" als T_{g}-Wert abgelesen wurde.

Die Resultate sind in der Tabelle 1 angegeben.

**Tabelle 1, n.b. = nicht bestimmt**

| | **Ref1** | **E1** | **Ref2** | **E2** | **Ref3** | **E3** | **Ref4** | **E4** | **Ref5** | **E5** | **Ref6** | **E6** | **Ref7** | **E7** | **Ref8** | **E8** |
|---|---|---|---|---|---|---|---|---|---|---|---|---|---|---|---|---|
| **K1** | | | | | | | | | | | | | | | | |
| **A1-1** | 10 | 10 | 10 | 10 | 10 | 10 | 10 | 10 | 10 | 10 | 10 | 10 | 10 | 10 | 10 | 10 |
| **A1-2** | 5 | 5 | 5 | 5 | 5 | 5 | 5 | 5 | 5 | 5 | 5 | 5 | 5 | 5 | 5 | 5 |
| **QL** | 5 | 0 | 5 | 0 | 5 | 0 | 5 | 0 | 5 | 0 | 5 | 0 | 5 | 0 | 5 | 0 |
| **A3** | 0 | 5 | 0 | 5 | 0 | 5 | 0 | 5 | 0 | 5 | 0 | 5 | 0 | 5 | 0 | 5 |
| **A2** | 0 | 0 | 0 | 0 | 0 | 0 | 0 | 0 | 5 | 5 | 5 | 5 | 5 | 5 | 5 | 5 |
| **Sylosiv** | 1 | 1 | 1 | 1 | 1 | 1 | 1 | 1 | 1 | 1 | 1 | 1 | 1 | 1 | 1 | 1 |
| **K2** | | | | | | | | | | | | | | | | |
| **B1-1** | 20.48 | 18.63 | | | | | | | 21.09 | 19.24 | | | | | | |
| **B1-2** | | | 18.63 | 20.58 | | | | | | | 23.27 | 23.27 | | | | |
| **B1-3** | | | | | 20.48 | 18.63 | | | | | | | 21.09 | 19.24 | | |
| **B1-4** | | | | | | | 20.3 | 18.5 | | | | | | | 20.9 | 19.1 |
| Mixing ratio | 100: 97.5 | 100: 88.7 | 100: 107.7 | 100: 98.0 | 100: 97.5 | 100: 88.7 | 100: 96.9 | 100: 88.1 | 100: 81.1 | 100: 74.0 | 100: 89.5 | 100: 81.6 | 100: 81.1 | 100: 74.0 | 100: 80.4 | 100: 73.5 |
| NCO/OH-ratio | 1.07 | 1.07 | 1.07 | 1.07 | 1.07 | 1.07 | 1.07 | 1.07 | 1.07 | 1.07 | 1.07 | 1.07 | 1.07 | 1.07 | 1.07 | 1.07 |
| (A1-1+A1-2+A2)/A3 | - | 1.44 | - | 1.44 | - | 1.44 | - | 1.44 | - | 1.51 | - | 1.51 | - | 1.51 | - | 1.51 |
| (A1-1+A1-2)/A3 | - | 1.44 | - | 1.44 | - | 1.44 | - | 1.44 | - | 1.44 | - | 1.44 | - | 1.44 | - | 1.44 |
| (A1-1+A1-2)/A2 | - | - | - | - | - | - | - | - | 18.5 | 18.5 | 18.5 | 18.5 | 18.5 | 18.5 | 18.5 | 18.5 |
| A3/A2 | - | - | - | - | - | - | - | - | 0 | 13 | 0 | 13 | 0 | 13 | 0 | 13 |
| Gelation Time [min] | 4 | 16 | 3 | 14 | 7 | 23 | 9 | 25 | 3 | 14 | 3 | 14 | 6 | 16 | 7 | 21 |
| **3h at 80°C** | | | | | | | | | | | | | | | | |
| TS [MPa] | 51.5 | 30.5 | 48 | 38.8 | 51.1 | 47.8 | 48.4 | 38.5 | 43 | 34.9 | 43.4 | 35.4 | 34.8 | 33.1 | 33.9 | 31.8 |
| EB [%] | 5 | 3 | 4 | 4 | 2.7 | 2.5 | 2.7 | 2 | 7 | 5 | 6 | 4 | 4 | 4 | 4.8 | 4.9 |
| Ein 0.05-0.25% [MPa] | 1980 | 1360 | 1850 | 1490 | 2430 | 2400 | 2320 | 2290 | 1510 | 1380 | 1490 | 1330 | 1710 | 1650 | 1650 | 1560 |
| Ein 0.5-5% [MPa] | 951 | n.b. | n.b. | n.b. | n.b. | n.b. | n.b. | n.b. | 798 | 653 | 825 | n.b. | n.b. | n.b. | n.b. | n.b. |
| 1.Tg (°C) | - | - | - | - | - | - | - | - | -75 | -75 | -76 | -77 | -75 | -75 | -75 | -75 |
| 2.Tg (°C) | 135 | 128 | 133 | 128 | 109 | 105 | 110 | 104 | 158 | 144 | 140 | 131 | 121 | 105 | 116 | 108 |

In der Tabelle 1 sind die Komponenten der Polyolkomp. **K1**, respektive der Polyisocyanatkomp. **K2**, in Gewichtsteilen angegeben.

Die Angaben **(A1-2** + **A1-2** + **A2)/A3, (A1-2** + **A1-2)/A3, (A1-2 + A1-2)/A2** und **A3/A2** in der Tabelle 1 beziehen sich auf das Verhältnis der OH-Gruppen von **A1-1** Neukapol 1119, **A1-2** Neukapol 1565, **A2** Polybd 45 HTLO, respektive **A3** Propoxylated Dytek^{®}A. Unter dem vorgehend beschriebenen Verhältnis wird das molare Verhältnis erwähnter Gruppen verstanden.

Die Bezeichnung "Mixing ratio" weist den Anteil der Komponente **K2** in Gewichtsteilen aus, welcher zu 100 Gewichtsteilen der entsprechenden Komponente **K1** zugegeben wurde.

"Gelation Time [min]" als Mass für die Offenzeit wurde die Zeit bis zur Klebefreiheit ("**tack-free time**") bestimmt. Dazu wurden einige Gramm des Klebstoffs in einer Schichtdicke von ca. 2 mm auf Pappkarton aufgetragen und im Normklima die Zeitdauer bestimmt, bis beim leichten Antippen der Oberfläche des Klebstoffs mittels einer Pipette aus LDPE erstmals keine Rückstände auf der Pipette mehr zurückblieben.

Bei **E1** bis **E8** handelt es sich um erfindungsgemässe Beispiele. Bei **R1** bis **R8** handelt es sich um Vergleichsbeispiele.

## Patentansprüche

1. Zweikomponentige Polyurethanzusammensetzung bestehend aus einer Polyolkomponente **K1** und einer Polyisocyanatkomponente **K2**;
wobei die Polyolkomponente **K1**
- mindestens ein Umsetzungsprodukt von epoxidierten Pflanzenölen mit einem C₁₈-Fettsäuren-Anteil von mehr als 50 Gew.-%, insbesondere mehr als 60 Gew.-%, bezogen auf die Gesamtmenge an Fettsäuren, mit monofunktionellen C₁₋₈-Alkoholen **A1-1**; und/oder
- mindestens ein Umsetzungsprodukt von epoxidierten Fettsäureestern monofunktioneller C₁₋₈-Alkohole, insbesondere Methanol, mit aliphatischen Alkoholen mit einer OH-Funktionalität im Bereich von 2 bis 5, insbesondere Glycerin, wobei den epoxidierten Fettsäureestern als Fettsäurekomponente Fettsäuregemische zugrunde liegen, die einen Gehalt an C₁₈-Fettsäuren, insbesondere ungesättigten C₁₈-Fettsäuren, von mindestens 50 Gew.-%, bezogen auf die gesamte Fettsäuremischung, aufweisen **A1-2**; und
- vorzugsweise mindestens ein Polybutadienpolyol mit einer OH-Funktionalität im Bereich von 2.1 bis 2.9, insbesondere 2.3 bis 2.7, und mit einem mittleren Molekulargewicht im Bereich von 2000 bis 4000 g/mol, insbesondere 2500 bis 3000 g/mol, und einer OH-Zahl von 40 - 100 mg KOH/g **A2**; und
- mindestens ein alkoxyliertes verzweigtes Alkylendiamin mit 5 - 10 C-Atomen, insbesondere 6 - 9 C-Atomen, mit einer OH-Zahl von 450 - 800 mg KOH/g **A3**;
umfasst,
und wobei die Polyisocyanatkomponente **K2**
mindestens ein aromatisches Polyisocyanat **B1** umfasst,
und wobei das Verhältnis aller NCO-Gruppen der aromatischen Polyisocyanate **B1:** aller OH-Gruppen der Polyolkomponente **K1** = 0.9 : 1 - 1.2 : 1, insbesondere 1.0 : 1 - 1.1 : 1, beträgt.

2. Zweikomponentige Polyurethanzusammensetzung gemäss Anspruch 1, **dadurch gekennzeichnet, dass** das Verhältnis der OH-Gruppen von **(A1-2** + **A1-2** + **A2)/(A3)** von 1.1 - 10, vorzugsweise 1.2 - 3.5, insbesondere bevorzugt 1.3 - 1.75, beträgt.

3. Zweikomponentige Polyurethanzusammensetzung gemäss einem der vorgehenden Ansprüche, **dadurch gekennzeichnet, dass** das Verhältnis der OH-Gruppen von **(A1-2 + A1-2)/(A3)** von 1.1 - 10, vorzugsweise 1.2 - 3.5, insbesondere bevorzugt 1.3 - 1.75, beträgt.

4. Zweikomponentige Polyurethanzusammensetzung gemäss einem der vorgehenden Ansprüche, **dadurch gekennzeichnet, dass** das Verhältnis der OH-Gruppen von **(A1-2** + **A1-2)/(A2)** von 5 - 30, vorzugsweise 10 - 25, insbesondere bevorzugt 15 - 20, beträgt.

5. Zweikomponentige Polyurethanzusammensetzung gemäss einem der vorgehenden Ansprüche, **dadurch gekennzeichnet, dass** das Verhältnis der OH-Gruppen von **(A3)/(A2)** von 5 - 25, vorzugsweise 7.5 - 20, insbesondere bevorzugt 10 - 15, beträgt.

6. Zweikomponentige Polyurethanzusammensetzung gemäss einem der vorgehenden Ansprüche, **dadurch gekennzeichnet, dass** bei der zweikomponentigen Polyurethanzusammensetzung die Summe aller OH-Gruppen von (**A1-1** + **A1-2** + **A2** + **A3**) ≥80%, bevorzugt ≥90%, besonders bevorzugt ≥95%, der Summe aller NCO-reaktiven Gruppen, insbesondere OH-Gruppen, der zweikomponentigen Polyurethan-zusammensetzung beträgt.

7. Zweikomponentige Polyurethanzusammensetzung gemäss einem der vorgehenden Ansprüche, **dadurch gekennzeichnet, dass** es sich um ein alkoxyliertes verzweigtes Alkylendiamin mit 5 - 10 C-Atomen mit einer OH-Zahl von 450 - 800 mg KOH/g **A3** ausgewählt aus der Liste bestehend aus N,N,N',N'-Tetrakis(2-hydroxypropyl)-2-metyl-pentamethylendiamin, N,N,N',N'-Tetrakis(2-hydroxypropyl)-2,2,4-Trimethylhexamethylendiamin und N,N,N',N'-Tetrakis(2-hydroxypropyl)-2,4,4-Trimethylhexamethylendiamin, insbesondere N,N,N',N'-Tetrakis(2-hydroxypropyl)-2-metyl-pentamethylendiamin, handelt.

8. Zweikomponentige Polyurethanzusammensetzung gemäss einem der vorgehenden Ansprüche, **dadurch gekennzeichnet, dass** es sich bei den Pflanzenölen von **A1-1** um Pflanzenöle ausgewählt aus der Liste bestehend aus Sonnenblumenöl, Rapsöl und Rizinusöl, insbesondere Sonnenblumenöl und/oder Rapsöl, handelt.

9. Zweikomponentige Polyurethanzusammensetzung gemäss einem der vorgehenden Ansprüche, **dadurch gekennzeichnet, dass** in **A1-2** der Gehalt der Fettsäuregemische an Ölsäure und Linolsäure, bezogen auf die gesamte Fettsäuremischung, mindestens 60 Gew.-%, mindestens 70 Gew.-%, insbesondere mindestens 80 Gew.-%, beträgt.

10. Zweikomponentige Polyurethanzusammensetzung gemäss einem der vorgehenden Ansprüche, **dadurch gekennzeichnet, dass** die Polyolkomponente **K1** mindestens ein Umsetzungsprodukt **A1-1** und mindestens ein Umsetzungsprodukt **A1-2** aufweist, wobei das Gewichtsverhältnis (**A1-1** / **A1-2**) von 1:3 bis 3:1, insbesondere 1:2 bis 2:1, besonders bevorzugt von 1:1 bis 2:1, beträgt.

11. Zweikomponentige Polyurethanzusammensetzung gemäss einem der vorgehenden Ansprüche, **dadurch gekennzeichnet, dass** es sich bei dem aromatischen Polyisocyanat **B1** um monomeres MDI oder Oligomere, Polymere und Derivate abgeleitet von MDI, insbesondere mit einer mittleren NCO-Funktionalität von 2.0 bis 4.0, vorzugsweise 2.0 bis 3.0, insbesondere 2.1 bis 2.6, handelt.

12. Zweikomponentige Polyurethanzusammensetzung gemäss einem der vorgehenden Ansprüche, **dadurch gekennzeichnet, dass** es sich bei dem aromatischen Polyisocyanat **B1** um Oligomere, Polymere und Derivate abgeleitet von MDI, insbesondere um Polymere abgeleitet von MDI, insbesondere mit einer mittleren NCO-Funktionalität von 2.1 bis 2.6, handelt.

13. Zweikomponentige Polyurethanzusammensetzung gemäss einem der Ansprüche 1 - 11, **dadurch gekennzeichnet, dass** es sich bei dem aromatischen Polyisocyanat **B1** um Monomere von MDI, insbesondere 4,4`-, 2,4'- und 2,2'-Diphenylmethandiisocyanat und beliebige Gemische dieser Isomeren, insbesondere Mischungen von 4,4`- und 2,4'-Diphenylmethandiisocyanat, insbesondere mit einem NCO-Gehalt 31.0 - 34.0 Gewichts-%, handelt.

14. Verfahren zum Verkleben von einem ersten Substrat mit einem zweiten Substrat umfassend die Schritte
- Mischen der Polyolkomponente (**K1**) und der Polyisocyanatkomponente (**K2**) einer zweikomponentigen Polyurethanzusammensetzung gemäss einem der Ansprüche 1 bis 13,
- Applizieren der vermischten Polyurethanzusammensetzung auf mindestens eine der zu verklebenden Substratoberflächen,
- Fügen der zu verklebenden Substrate innerhalb der Offenzeit,
- Aushärten der Polyurethanzusammensetzung.

15. Verfahren zum Verfüllen von Fugen und Spalten in einem Substrat umfassend die Schritte
a) Mischen der Polyolkomponente (**K1**) und der Polyisocyanatkomponente (**K2**) einer zweikomponentigen Polyurethanzusammensetzung gemäss einem der Ansprüche 1 bis 13,
b) Applizieren der vermischten Polyurethanzusammensetzung in die zu verfüllende Fuge oder den zu verfüllenden Spalt des Substrates,
c) Aushärten der Polyurethanzusammensetzung in der Fuge oder im Spalt.
